**Europäisches Patentamt**

**European Patent Office**

**Office européen des brevets**

(11) Veröffentlichungsnummer : **0 343 552 B1**

(12) **EUROPÄISCHE PATENTSCHRIFT**

(45) Veröffentlichungstag der Patentschrift :
**19.08.92 Patentblatt 92/34**

(21) Anmeldenummer : **89109145.6**

(22) Anmeldetag : **20.05.89**

(51) Int. Cl.⁵ : **B21D 37/14**

(54) **Stanzmaschine mit ein- und auswechselbarem Stanzwerkzeug und Werkstückvorschub.**

(30) Priorität : **27.05.88 DE 3818001**

(43) Veröffentlichungstag der Anmeldung :
**29.11.89 Patentblatt 89/48**

(45) Bekanntmachung des Hinweises auf die
Patenterteilung :
**19.08.92 Patentblatt 92/34**

(84) Benannte Vertragsstaaten :
**CH ES FR GB IT LI SE**

(56) Entgegenhaltungen :
**EP-A- 0 241 933**
**DE-A- 3 101 583**
**FR-A- 1 352 964**
**GB-A- 2 195 937**
**US-A- 4 304 041**

(73) Patentinhaber : **Trumpf GmbH & Co**
**Postfach 1320 Johann-Maus-Strasse 2**
**W-7257 Ditzingen (DE)**

(72) Erfinder : **Erlenmaier, Werner, Dil.-Ing.**
**Ganswiesenweg 20**
**W-7016 Gerlingen (DE)**

(74) Vertreter : **Schmid, Berthold, Dipl.-Ing.**
**Kohler Schmid + Partner Patentanwälte**
**Ruppmannstrasse 27**
**W-7000 Stuttgart 80 (DE)**

## Beschreibung

Die Erfindung bezieht sich auf eine Stanzmaschine gemäß dem Oberbegriff des Patentanspruchs 1. Eine solche Stanzmaschine ist aus der DE 25 26 765 C 2 bekannt. Das Bearbeiten eines, normalerweise aus einer Blechtafel bestehenden Werkstücks erfordert in einer modernen Fertigung den Einsatz mehrerer, in manchen Anwendungsfällen sogar vieler Stanzwerkzeuge nacheinander. Sobald das eine Stanzwerkzeug ausgebracht ist, wird es gegen das nächste ausgetauscht, und diesem folgt dann das dritte usw. Wenn das Werkstück vollständig bearbeitet ist, beginnt man beim Stanzen des nächsten Werkstücks wieder mit dem ersten Stanzwerkzeug.

Aus der DT 19 55 193 C 3 ist ein Werkzeughalter zum raschen Ein- und Auswechseln der Stanzwerkzeuge bekannt. Jedes Stanzwerkzeug besteht in bekannter Weise zumindest aus einem Stanzstempel und einer dessen Querschnitt entsprechenden Matrize. Vielfach kommt noch ein Abstreifer hinzu. Die Werkzeughalter sind so konstruiert, daß mit ihnen das komplette Stanzwerkzeug in die Werkzeugaufnahme der Stanzmaschine hineingebracht werden kann, wobei die Bewegung des Halters von Hand erfolgt oder über eine automatische Werkzeugwechselvorrichtung gesteuert werden kann. In der Werkzeugaufnahme findet ein übergeben an die Halterungen für die einzelnen Stanzwerkzeugteile mit entsprechender Einriegelung statt. Nach Ausgebrauch dieses Stanzwerkzeugs wird es mit Hilfe seines Halters nach vorherigem Lösen der Verriegelungsvorrichtung aus der Werkzeugaufnahme heraus und an eine Stelle gebracht, an der es die Bearbeitung mit dem nächsten Stanzwerkzeug nicht behindert, andererseits aber rasch und sicher wieder geholt werden kann. Es wäre relativ aufwendig, das Werkzeug vom Halter abzunehmen und diesen mit einem neuen Werkzeug zu bestücken. Aus diesem Grunde bewahrt man jedes Werkzeug zweckmäßigerweise mit einem eigenen Halter in einem Regal, Magazin oder an anderer geeigneter Stelle auf. Zur bewegung des Halters ist er mit einem Griff versehen und gestattet somit das Auswechseln von Hand. Dazu muß man in den Arbeitsbereich der Maschine greifen, was bei laufender Maschine aus sicherheitstechnischen Gründen nicht zulässig ist. Jeder Werkzeugwechsel mit der Hand bedeutet deshalb ein Stillsetzen der Stanzmaschine.

Die DT 19 55 193 C 3 schlägt allerdings auch vor, den Halter mit Hilfe einer Werkzeugwechselvorrichtung zur Werkzeugaufnahme der Stanzmaschine und von dieser wieder an die Ausgangsstelle zurück zu transportieren. Dabei ist es besonders vorteilhaft, wenn diese Wechselvorrichtung das ausgebrauchte Werkzeug mit seinem Halter automatisch ablegt.

Eine automatische Werkzeugwechselvorrichtung ist aus der DE 20 44 183 C 3 bekannt, wobei die Wechselvorrichtung mit einem unterhalb der Werkstückebene befindlichen Werkzeugmagazin über eine auf- und abfördernde Übergabevorrichtung verbunden ist. Der Werkzeugwechsel bedarf einer speziellen Steuerung, die insbesondere bei automatisch arbeitender Stanzmaschine auf deren Arbeitsprogramm abgestimmt sein muß. Es ist deshalb nicht außergewöhnlich, wenn allein für den automatischen Werkzeugwechsel ein Betrag aufgewendet werden muß, der in der Größenordnung von beispielsweise einem Viertel bis einem Drittel der Gestehungskosten der Stanzmaschine liegt.

Bei der zum Oberbegriff des Patentanspruchs 1 angeführten DE 25 26 765 C 2 wird der Nachteil vermieden, der sich aus der zuvorgenannten DE 20 44 183 C 3 dadurch ergibt, daß die Wechselvorrichtung eine auf- und abfördernde Übergabevorrichtung benötigt, weil das Werkzeugmagazin unterhalb der Werkstückebene angeordnet ist. Dazu schlägt die DE 25 26 765 C 2 vor, die Magazinhalterung für das zu wechselnde Werkzeug in der Übergabe- bzw. Übernahmestelle zwischen der Wechselvorrichtung und der Werkzeugaufnahme der Maschine anzuordnen, so daß lediglich eine einzige vorzugsweise geradlinige Bewegung vom Werkzeugmagazin zur Werkzeugaufnahme bzw. umgekehrt stattfindet.

Auch bei der gattungsgemäßen DE 25 26 765 C 2 beansprucht die Werkzeugwechselvorrichtung und das Werkzeugmagazin viel Platz innerhalb der Stanzmaschine, da getrennte Aufnahmekassetten für die Matrize und den Stanzstempel jeweils unterhalb und oberhalb der Blechebene vorgesehen sind.

Bei der EP-A-02 41 933 sind die Werkzeuge durch ein Führungsgestell miteinander verbunden und werden mitsamt dem Führungsgestell als eine Einheit in die Maschine gebracht.

Bei der vorliegenden Stanzmaschine dagegen, stehen Ober- und Unterteil des Werkzeugs nur über den Ständer miteinander in Verbindung. Deshalb müssen Ober- und Unterteile des Werkzeugs gemeinsam und ausgerichtet vom Werkzeughalter zur Werkzeugaufnahme gebracht werden.

Die Bewegung einer einachsigen Blechführungs- oder Vorschubeinrichtung der bekannten Stanzmaschine gemäß EP-A-02 41 933 hat gemäß EP-A-02 41 933 hat nichts mit der Wechselbewegung der Werkzeugswechseleinrichtung zu tun. Auch bei der DE-A-31 01 583, bei der es sich um eine Mehrstufenpresse mit einer Werkzeugwechseleinrichtung handelt, hat die bewegung der Wechseleinrichtung mit der nicht dargestellten Bewegung des Werkstücks nichts zu tun.

Die GB-A-2 195 937 beschreibt einen Werkzeugwechsler für ein rotierendes Werkzeugmagazin (Revolvermagazin), das aus einem oberen Werkzeugaufnahmegehäuse und einem koaxial und synchron dazu rotie-

2

renden unteren Werkzeuggehäuse jeweils zur Aufnahme eine oberen und unteren Werkzeugteils besteht. Hydraulische Wechselzylinder sind so vorgesehen, daß sie die Werkzeugteile aus den Gehäusen in den Arbeitsraum der Presse verschieben. Im Gegensatz zum Halter der vorgeschlagenen Stanzmaschine wird hier der Halter nicht zurückgezogen, sondern bildet einen Teil der Werkzeugführung.

Auch bei zuletzt angeführten Druckschrift hat die Werkzeugwechselbewegung nichts mit der Werkstückbewegung zu tun.

Die Aufgabe der Erfindung besteht darin, eine Stanzmaschine der eingangs genannten Art so weiterzubilden, daß das Austauschen der Werkzeuge mit geringerem Aufwand und Platzbedarf durchführen läßt. Die Stanzmaschine sollte so ausgebildet sein, daß sich das Problem der Unterbringung von in Haltern befindlichen Werkzeugen einer für eine bestimmte Bearbeitung benötigten Gruppe von Stanzwerkzeugen vereinfachen und das Wechseln bei einer automatisch arbeitenden Stanzmaschine ebenfalls automatisch durchführen läßt.

Zur Lösung dieser Aufgabe wird erfindungsgemäß vorgeschlagen, daß die Stanzmaschine gemäß dem Oberbegriff des Anspruchs 1 entsprechend dem kennzeichnenden Teil dieses Anspruchs ausgebildet ist. Die Werkstück- Tragschiene der heute gebräuchlichen Stanzmaschinen ist verhältnismäßig lang. Sie kann im Bereich von 2 bis 3 Metern liegen. Das bedeutet, daß bei der Größe der zu einer solchen Stanzmaschine gehörenden Stanzwerkzeuge und Halter an einer derartigen Tragschiene durchaus 8 bis 12 Halter mit jeweils einem kompletten Stanzwerkzeug unterzubringen sind. Die Tragschiene ist darüberhinaus in bekannter Weise mit Haltepratzen od. dgl. Haltevorrichtungen ausgestattet. Zwischen zwei und seitlich dieser Pratzen kann man den an sich sonst ungenutzten Platz für die Unterbringung der Halter ausnutzen. Es ist lediglich darauf zu achten, daß die Pratzen das Werkstück wie üblich sicher erfassen können und sie auch in ihrer Funktionsweise durch die mit jeweils einem Stanzwerkzeug versehenen Halter nicht beeinträchtigt werden.

Bei dieser Stanzmaschine sind im Falle mehrerer Halter mit Stanzwerkzeug die Halter, mit deren Werkzeug momentan nicht gearbeitet wird, entlang der Tragschiene aufgereiht.

Für den Werkstückvorschub ist die Tragschiene in ihrer Längsrichtung verschiebbar. Deshalb wird die Werkzeugaufnahme der Stanzmaschine zumindest in dieser Richtung nicht bewegt und infolgedessen kann jeder Halter unter Ausnutzung der Werkstückvorschubvorrichtung über eine mehr oder weniger große Verschiebebewegung der Tragschiene gegenüber der Werkzeugaufnahme der Stanzmachine ausgerichtet werden. Zum Einwechseln in die Maschine bedarf es somit lediglich noch einer Relativbewegung zwischen diesem ausgerichteten Halter mit Stanzwerkzeug und der Werkzeugaufnahme der Stanzmaschine. Eine derartige Relativbewegung kann man entweder dadurch erreichen, daß man die Werkzeugaufnahme gegen den Halter hin bewegt, oder aber, bei nicht bewegbarer Werkzeugaufnahme, die Tragschiene mit den daran befestigten Haltern senkrecht zu ihrer Längsachse gegen die Werkzeugaufnahme der Stanzmaschine hin, bis das Stanzwerkzeug in der Werkzeugaufnahme angekommen und vom entsprechenden Mechanismus übernommen sowie eingeriegelt worden ist. Letzteres setzt aber, wie gesagt, voraus, daß die Tragschiene nicht nur in ihrer Längsrichtung, sondern auch quer dazu bewegbar ist, was bei einem vielfach gebräuchlichen X-Y-Werkstückvorschub der Fall ist.

Es besteht allerdings auch noch eine dritte Möglichkeit, die man insbesondere dann ins Auge fassen kann, wenn die Tragschiene nur in ihrer Längsrichtung hin- und herverschiebbar ist. In diesem Fall kann man nämlich den Halter mittels einer Hilfsvorrichtung gegen die Werkzeugaufnahme hin bewegen, um so das Werkzeug mit dem Halter ein- bzw. auszuwechseln.

Vorstehend wurde davon ausgegangen, daß an ein und derselben Tragschiene mehrere Halter mit Werkzeugen angebracht sein können. Statt dessen ist es aber ohne weiteres auch möglich, an der Tragschiene nur einen Halter mit Werkzeug anzubringen und mit Hilfe der Werkstückvorschubvorrichtung nur diesen einen Halter mit Werkzeug ein- und auszuwechseln. Hierbei ist es dann besonders vorteilhaft, wenn die Werkstückvorschubvorrichtung das Werkstück in X- und Y-Richtung bewegen kann. Die Werkstückvorschubvorrichtung kann aber auch dann noch sinnnvoll ausgenützt werden, wenn die Tragschiene mit ihrer Hilfe nur in Tragschienen-Längsrichtung verfahrbar ist. Die Relativbewegung quer hierzu wird in diesem Falle gemäß den vorstehenden Erläuterungen ausgeführt. Wenn dieses Werkzeug ausgebraucht ist, so entnimmt man es der Werkzeugaufnahme und bringt es zweckmäßigerweise in einen Bereich, der weit genug von letzterer entfernt ist, so daß es dort leicht von Hand oder automatisch gegen das nächste ausgewechselt werden kann.

Wenn der Halter an der Tragschiene gehalten und letztere quer zu ihrer Längsachse gegen die Werkzeugaufnahme hin zustellbar ist, so verfügt die Stanzmaschine, wie gesagt, über einen sogenannten X-Y-Vorschub für das Werkstück, der für den Werkzeugwechsel voll ausgenutzt werden kann. Insofern ist für den Werkzeugwechsel keinerlei Mehraufwand erforderlich.

Der bzw. jeder Halter ist in weiterer Ausgestaltung der Erfindung lösbar an einem Zwischenstück der Tragschiene befestigt. Es bedarf somit eines Zwischenstücks pro Halter, wobei man das Zwischenstück vorteilhafterweise so an den Halter anpasst, daß letzterer keiner Abänderung gegenüber der herkömmlichen Ausbildung bedarf. Andererseits muß das Zwischenstück so gestaltet sein, daß es sich leicht an der Tragschiene befestigen läßt und sein Platzbedarf möglichst gering ist. Damit reduziert sich dann automatisch auch sein Gewicht. Im übrigen ist hierdurch ein Nachrüsten bestehender Maschinen leicht möglich.

Eine weitere Variante der Erfindung besteht darin, daß das Zwischenstück als mit der Tragschiene verbundene, zu ihr parallele schienenförmige Haltevorrichtung für mehrere Halter ausgebildet ist. Man kann diese Haltevorrichtung mit einer ihrer Länge und der Größe der Halter entsprechenden Zahl von Haltern mit Werkzeugen bestücken und somit die Werkzeuge gruppenweise austauschen. Das bedeutet allerdings, daß das Zwischenstück von der Tragschiene abnehmbar und vor allen Dingen auch rasch und sicher damit verbindbar sein muß. Gegebenenfalls kann man zwischen die Tragschiene und das Zwischenstück noch ein oder mehrere Verbindungsglieder schalten.

Jedes Zwischenstück ist vorteilhafterweise in Längsrichtung der Tragschiene direkt oder indirekt verschieb- und feststellbar an letzterer gehalten. Dies ist insbesondere dann günstig, wenn nicht gar notwendig, wenn sich an der Tragschiene noch Pratzen od. dgl. zum Festhalten des Werkstücks befinden, die längsverstellbar an der Tragschiene angebracht sind.

Eine weitere Ausbildung der Erfindung sieht vor, daß jeder Halter bzw. der Tragbalken über eine vertikale Schiebeverbindung, insbesondere Schwalbenschwanzverbindung, mit seinem Zwischenstück bzw. der Haltevorrichtung verbindbar ist. Man kann somit jeden Halter in sein Zwischenstück einhängen und im Bedarfsfalle gegen einen anderen Halter mit einem weiteren Stanzwerkzeug austauschen. Die Sicherung des Halters an seinem Zwischenstück muß in geeigneter und bekannter Weise erfolgen, beispielsweise mit Hilfe wenigstens einer Klemmschraube. Dabei ist es besonders vorteilhaft, daß ein unterer Längsanschlag des Zwischenstücks bzw. der Haltevorrichtung für seinen Halter bzw. den Tragbalken vorhanden ist. Man schiebt demnach den Halter von oben her in die Führung ein, bis er am Längsanschlag auftrifft. Damit hat er automatisch die richtige Höhenlage gegenüber der Werkzeugaufnahme der Stanzmaschine erreicht. Sie muß nur noch entsprechend gesichert werden.

Eine andere bevorzugte Ausführungsform der Erfindung kennzeichnet sich dadurch, daß der Halter einem der Tragschienenendbereiche zugeordnet ist. Hier ist vornehmlich an lediglich einen einzigen Halter gedacht, der sich an einem der Tragschienenendbereiche befindet. Das schließt allerdings das Anbringen je eines Halters an jedem Tragschienenendbereich nicht aus. Man kann diesen Halter zum Wechseln des Werkzeugs zunächst in eine seitliche Endstellung fahren, so daß er besonders gut zugänglich ist. Anschließend wechselt man ihn gegen einen anderen Halter aus, der daraufhin durch Verschieben der Tragschiene in dieser Dimensionsrichtung gegenüber der Werkzeugaufnahme ausgerichtet wird. Den Halter kann man automatisch, aber auch von Hand, von der Tragschiene abnehmen bzw. daran anbringen.

In Weiterbildung der Erfindung wird vorgeschlagen, daß der Halter mittels eines drehbar oder verschiebbar an der Tragschiene gelagerten Arms gehalten und der Arm mit einem Dreh- oder Verschiebeantrieb verbunden ist. Mit Hilfe dieses Arms kann der Halter über das Ende der Tragschiene hinaus verschwenkt und hierdurch beispielsweise besser zugänglich gemacht werden. Andererseits kann man aber diese Schwenkbewegung des Halters auch zum Auswechseln des Halters gegen einen anderen, außerhalb der Tragschiene befindlichen ausnutzen.

Zweckmäßigerweise handelt es sich beim Dreh- oder Verschiebeantrieb um einen hydraulischen oder pneumatischen Arbeitszylinder, wobei der Drehantrieb im seitlichen Abstand von der Armdrehachse am Arm angelenkt ist. In der Regel ist hydraulisches Drucköl oder Druckluft bei derartigen Stanzmaschinen ohnehin vorhanden, so daß die Beschaffung dieser Hilfsenergie keine Probleme bereitet. Im übrigen ist es im Rahmen dieser Ausbildung ohne weiteres möglich, den Drehantrieb durch einen geraden Verschiebeantrieb zu setzen, wenn dies aus irgendwelchen Gründen günstiger ist. Vor allen Dingen läßt sich diese geradlinige Verschiebebewegung auch zum Übergeben des mit einem Werkzeug bestückten Halters an die Werkzeugaufnahme der Maschine zusätzlich ausnutzen. Letzteres gilt sinngemäß auch für die Schwenkbewegung des Arms gegenüber der Tragschiene, d.h., auch dieser Schwenkarm kann in zweifacher Weise genutzt werden.

Eine besonders bevorzugte Variante der Erfindung ist dadurch gekennzeichnet, daß die Stanzmaschine mit einem Magazin od. dgl., Lagervorrichtung für mehrere Werkzeughalter ausgestattet ist, und daß das als bewegbarer Arm ausgebildete Zwischenstück klemmbar, verrastbar oder in ähnlicher Weise lösbar mit jeweils einem Halter kuppelbar ist, wobei jeder Halter in eine Übergabe- bzw. Übernahmeposition bringbar ist. In diesem Falle ist es ausreichend, wenn von der Tragschiene jeweils nur ein Halter mit Stanzwerkzeug übernommen wird und man dieses nach Ausgebrauch in das Magazin zurückbringt, um anschließend daraus das nächste zu entnehmen und es daraufhin in die Werkzeugaufnahme einzuwechseln. Man kann mit der Tragschiene, insbesondere mit dem freien Tragschienende, ohne weiteres in das Magazin einfahren, um daraus den als nächstes benötigten Halter aufzunehmen. Falls sich im Bereich des freien Tragschienenendes gemäß den vorstehenden Ausführungen ein drehbar gelagerter Arm befindet, so braucht die Tragschiene selbst in das Magazin nicht einzugreifen, vielmehr kann man den Abstand insbesondere der in ihrer Verschiebeendstellung befindlichen Tragschiene vom Magazin mit Hilfe dieses Armes überbrücken. Man erspart sich auf diese Weise

**4**

einen ortsfest installierten Übergabearm, der bei einer bekannten Stanzmaschine zwischen ein Magazin und die Werkstückaufnahme der Stanzmaschine geschaltet ist.

Wenn der Arm in Weiterbildung der Erfindung als doppelarmiger Hebel ausgebildet ist und er an seinen beiden Enden je eine Klemmvorrichtung od. dgl. für je einen Halter trägt, so kann man die eine zum Festhalten des in das Magazin zurückbringbaren Halters und die andere zum Übernehmen des als nächsten benötigten Halters mit Werkzeug benutzen. Dies beschleunigt Werkzeugwechsel. Damit der doppelarmige Hebel beim Betrieb nicht im Weg ist, ist es zweckmäßig, für ihn eine zusätzliche vertikale Verstellbewegung vorzusehen.

Die Halter sind in weiterer Ausgestaltung der Erfindung im Magazin kreisbogenförmig angeordnet und bewegbar. Aufgrund der kreisbogenförmigen Anordnung kann man die Klemmvorrichtung über eine Drehbewegung jedem einzelnen Halter des Magazins zuordnen. Bei einem geradlinigen Anordnen der Halter im Magazin wäre die Zuordnung bei feststehender Klemmvorrichtung durch Verschieben der Halterreihe gegenüber letzterer vorzunehmen. In jedem Falle muß aber die Distanz zwischen der Klemmvorrichtung und dem "ausgewählten" Halter noch überbrückt werden. Dies ist bei geradlinig angeordneten Haltern im seitlicher Verschiebemöglichkeit dadurch leicht möglich, daß man die Tragschiene noch etwas weiter verfährt, d. h. zum Magazin hin bewegt.

Eine in dieser Hinsicht besonders bevorzugte Ausführungsform der Erfindung ist durch mehrere übereinander angeordnete Reihen von Haltern im Magazin gekennzeichnet, wobei die einzelnen Halterreihen um jeweils eine Einheit heb- und senkbar ausgebildet sein müssen, damit sie gegenüber der Klemmvorrichtung ausgerichtet werden können. Die Übergabe erfolgt dann jeweils in der vorstehend geschilderten Weise nach dem Anheben oder Absenken der jeweils infrage kommenden Reihe und der Zuordnung der Klemmvorrichtung gegenüber dem aus dieser Reihe ausgewählten Halter mit Stanzwerkzeug.

Eine andere bevorzugte Variante der Erfindung ist durch zwei beidseits der Werkzeugaufnahme angebrachte Werkzeugauflagetische gekennzeichnet, deren Seitenabstand wenigstens etwa der Breite eines Halters, quer zur Übergaberichtung gemessen, entspricht. Auf dem Auflagetisch liegt das zu stanzende Werkstück, beispielsweise die erwähnte Blechtafel, auf. Oberhalb der Blechebene befindet sich die Aufnahme für den Stanzstempel und unterhalb diejenige für die Matrize. Wenn nur ein Halter an der Tragschiene vorhanden ist, so kann man bei stillstehenden Tischen mit entsprechendem Seitenabstand den Werkzeugwechsel selbst bei auf dem Tisch aufliegenden Werkstück vornehmen. Dasselbe gilt, wenn statt zweier Tische ein gemeinsamer Tisch mit einem entsprechenden Längsschlitz vorgesehen ist. Letzterer müsste etwa so breit sein, wie der Seitenabstand zweier Tische und so weit ins Tischinnere reichen, daß der Halter mit dem Stanzwerkzeug bis in die Werkzeug aufnahme hinein querbewegt werden kann.

Wenn an der Tragschiene mehrere Halter mit Stanzwerkzeugen vorhanden sind, so kann man nur jeweils eine davon dem Schlitz bzw. dem Zwischenraum zwischen den beiden Auflagetischen zuordnen. Die gesamte Tischbreite läßt sich in diesem Falle nur dann ausnützen, wenn gemäß einer bevorzugten Variante der Erfindung ein Werkstückauflagetisch oder die beiden durch Seitenabstand getrennten Werkstückauflagetische quer zur Längsrichtung der Tragschiene mit dieser zusammen verschiebbar sind. Der Tisch kann also in diesem Falle niemals in Kollision mit irgendeinem Halter kommen.

Im übrigen ist ein verschiebbarer Tisch bzw. sind zwei verschiebbare durch einen Seitenabstand voneinander getrennte Tische immer dann verschiebbar auszubilden, wenn die Werkzeugteile abnehmbar am Halter befestigt sind und letzterer nach der Übergabe der Werkzeugteile an ihren Teil der Werkzeugaufnahme wieder zurückgezogen wird. Er macht dann als "leerer" Halter sämtliche Bewegungen der Tragschiene während der Bearbeitung mit. Bei der erfindungsgemäßen Stanzmaschine finden in bevorzugter Weise nur Halter Verwendung, die die Werkzeugteile abnehmbar halten und nach dem Einriegeln der Werkzeugteile in die Werkzeugaufnahme vom Stanzwerkzeug getrennt sind und, wie gesagt, zurückgezogen sowie leer mitbewegt werden können. Die Verbindung des Halters mit den Werkzeugteilen erfolgt in bekannter Weise klemmend oder rastend, wobei zweckmäßigerweise jedes Werkzeugteil von einem gabelartigen Element bzw. zwei Haltearmen des Halters gehalten wird. Bei fest an der Tragschiene angebrachtem Halter kann letzterer auch mehrteilig ausgebildet sein, indem man an der Tragschiene die einzelnen, gabelförmigen Halterelemente od. dgl. übereinander unmittelbar oder auch unter Verwendung eines Zwischenstücks befestigt.

Anstelle eines verschiebbaren gemeinsamen Tisches, bzw. zweier im Abstand voneinander angeordneter "Tischhälften", kann man auch einen aus Teileelementen bestehenden Tisch vorsehen, wobei die Aufgliederung parallel zur Längsachse der Tragschiene erfolgt. In diesem Falle sind dann die einzelnen Tischelemente einzeln absenkbar, wobei das Absenken automatisch über beispielsweise die Werkstück-Klemmhalterungen erfolgen kann. Letztere drücken dann immer jeweils so viele Tischteile nach unten, als es die jeweilige Bewegung der Tragschiene quer zu ihrer Längsachse erfordert. Ein derartiger "Gliedertisch" ist sowohl bei lediglich einem einzigen Halter an der Tragschiene als auch bei mehreren Haltern sinnvoll.

Eine weitere Ausgestaltung der Erfindung ist durch eine an sich bekannte numerische Steuerungsvorrichtung für die Verschiebung zumindest der Tragschiene wenigstens in deren Längsrichtung, vorzugsweise aber auch senkrecht hierzu gekennzeichnet. Diese numerische Steuerung kann darüberhinaus auch noch zu allen anderen Funktionen, insbesondere dem vollautomatischen Werkzeugwechsel herangezogen werden.

Wenn man Halter mit festen Seitenabständen an der Tragschiene anbringt, so kann man in sehr vorteilhafter Weise diese Seitenabstände in die Steuerung eingeben und beim Werkzeugwechsel entsprechend berücksichtigen, insbesondere beim Ausrichten des jeweils für den nächsten Werkzeugwechsel benötigten Halters gegenüber der Werkzeugaufnahme.

Im übrigen kann es sich in vorteilhafter Weise bei dieser Stanzmaschine um eine kombinierte Bearbeitungsmaschine handeln, die außer einer Stanzmöglichkeit auch noch eine Bearbeitung beispielsweise durch einen Laser bietet, mit dessen Hilfe das auf dem Tisch aufliegende Werkstück alternativ oder zusätzlich zum Stanzen noch bearbeitet werden kann. Der Seitenabstand zwischen Stanzstempel und Laserdüse kann in bekannter Weise über die Steuerung berücksichtigt werden.

Die Erfindung wird nachstehend anhand der Zeichnung näher erläutert. Die Zeichnung zeigt verschiedene Ausführungsbeispiele der Erfindung. Hierbei stellen dar:

Fig. 1 Schematisch und perspektivisch eine erste Ausführungsform der Stanzmaschine, teilweise abgebrochen,

Fig. 2 einen Vertikalschnitt durch die Fig. 1 im Bereich von Werkzeugaufnahme und Halter, ebenfalls abgebrochen, vor der Übergabe des Werkzeugs,

Fig. 3 bei der Übergabe des Werkzeugs und

Fig. 4 nach Rückführung der leeren Kassette,

Fig. 5 eine teilweise aufgebrochene Draufsicht auf den am Zwischenstück befindlichen Halter,

Fig. 6 eine abgebrochene Draufsicht auf die Maschine der Fig. 1, schematisiert,

Fig. 7 eine der Fig. 6 entsprechende Draufsicht auf eine zweite Ausführungsform,

Fign. 8 und 9 Darstellungen gemäß Fign. 6 und 7 zweier weiterer Varianten der Erfindung.

Die Stanzmaschine ist, sofern nachstehend nichts anderes erläutert wird, von bekannter Bauart. Sie besitzt ein Maschinengestell 1, das oben in der Art eines Auslegerarmes ausgebildet sein kann, der etwa an seinem freien Ende den oberen Teil 2 der Werkzeugaufnahme 3 trägt. In die Werkzeugaufnahme wird das Stanzwerkzeug 5 eingesetzt und nachfolgend eingeriegelt, das wenigstens aus einem Stempel 6 und einer Matrize 7 besteht. Es kann noch ein Abstreifer 8 hinzukommen. Der Stanzstempel und ggf. auch der Abstreifer sind dem oberen Teil 2 der Werkzeugaufnahme 3 zugeordnet, während die Matrize in den unteren Teil 4 der Werkzeugaufnahme 3 eingesetzt wird. Die Einriegelung erfolgt durch die schematisch eingezeichnete obere Verriegelungsvorrichtung 9 für den Stanzstempel und ggf. den Abstreifer sowie die untere Verriegelungsvorrichtung 10 für die Matrize. Die Einriegelungsbewegung ist durch den Pfeil 11 bzw. 12 versinnbildlicht. Logischerweise erfolgt das Ausriegeln entgegen diesen beiden Pfeilen. Die Verriegelungsvorrichtung ist als solche bekannt und aus diesem Grunde nicht näher dargestellt. Im übrigen erfolgt das Einwechseln des Stanzwerkzeugs 5 mit Hilfe einer Kassette oder eines Halters 13, der zumindest zwei vorzugsweise aber drei in Gebrauchslage übereinander liegende Haltearmpaare 14, 15 und 16 besitzt.

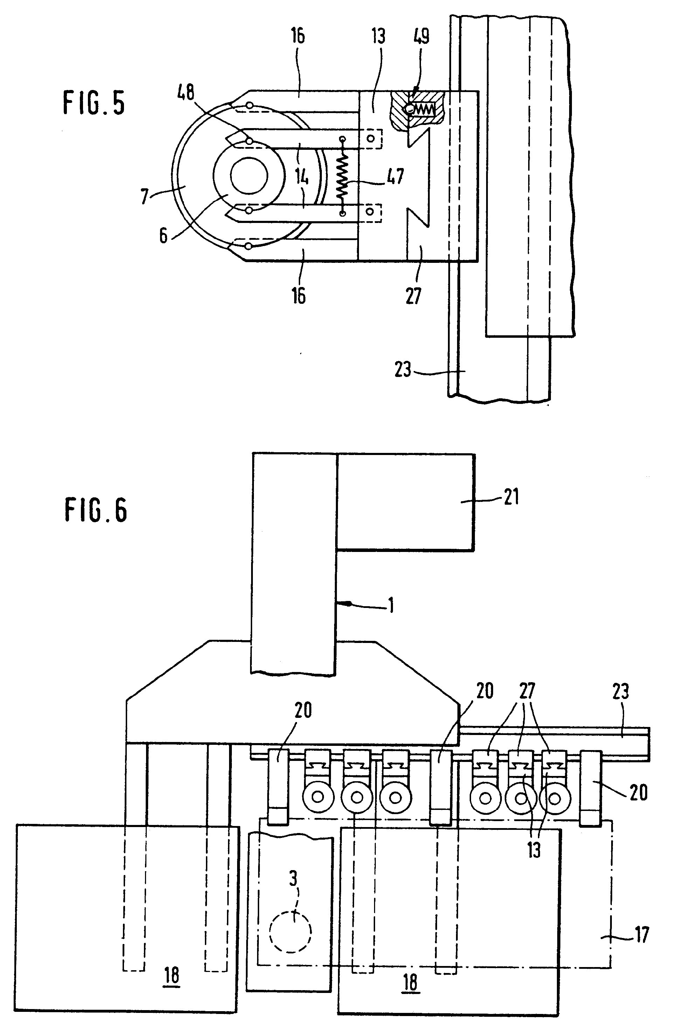

Die Stanzmaschine dient in erster Linie zur Bearbeitung flacher, tafelförmiger Werkstücke 17, wie Metallplatten aus Stahl Leichtmetall und dergl. Das Werkstück wird auf einen Werkstückauflagetisch aufgelegt, der in nicht gezeigter Weise spezielle, die Reibung verringernde Gleitelemente in Form von Kugeln und dergl. aufweisen kann. Um das Werkstück 17 gegenüber dem Bearbeitungswerkzeug 5 verschieben zu können, ist ein an sich bekannter Werkstückvorschubantrieb vorhanden. Zu diesem Zwecke wird das Werkstück, insbesondere der Werkstückrand 19 mit Hilfe wenigstens einer, vorzugsweise aber zweier oder mehrerer Pratzen 20 festgehalten,, die in bekannter Weise öffnen- und schließbar sind. Das Öffnen und Schließen kann mittels der Maschinensteuerung 21 erfolgen, wobei es sich in bekannter Weise um eine numerische Steuerung handeln kann, die alle, zumindest aber alle wichtigen Funktionen der Stanzmaschine, insbesondere nach einem vorgegebenen Programm, steuert (Fig. 6). Um eine Festlegung des notwendigen Pratzenabstands zu ermöglichen, sind die Pratzen in Richtung des Doppelpfeils 22 verschieb- und festsetzbar an einer Werkstück-Tragschiene 23 gelagert. Letztere ist ihrerseits in Richtung des Doppelpfeils 22 an der Maschine hin- und herverschiebbar. Auf diese Weise kann man das Werkstück 17 in Richtung des Doppelpfeils 22 gegenüber dem Stanzwerkzeug 5 verschieben. Wenn man diese Verschiebebewegung als X-Richtung bezeichnet, so ist eine Relativbewegung zwischen Werkstück und Werkzeug in der dazu senkrechten Y-Richtung nur dann möglich, wenn man entweder die Tragschiene 23 senkrecht zu ihrer Längsachse verschiebbar am Maschinengestell 1 lagert, oder aber eine verschiebbare Lagerung der Werkzeugaufnahme 3, und damit auch des Stanzwerkzeugs 5, im Sinne des Doppelpfeils 24 am Maschinengestell 1 vorsieht. Im Falle einer X-Y-Verschiebung des Werkstücks 17 gegenüber dem feststehenden Stanzwerkzeug 5 ist die Tragschiene 23 an einem Schlitten 25 verschiebbar gelagert, der im Sinne des Doppelpfeils 26 gegenüber dem Maschinengestell 1 hin- und herverschiebbar ist. Die Antriebe in X- und Y-Richtung erfolgen in bekannter Weise über angetriebene Ritzel und Zahnstangen, wobei die eine Zahnstange beispielsweise an der Rückseite der Tragschiene

EP 0 343 552 B1

23 angebracht, insbesondere angeformt sein kann, während die hierzu senkrechte Zahnstange am Maschinengestell festgemacht ist.

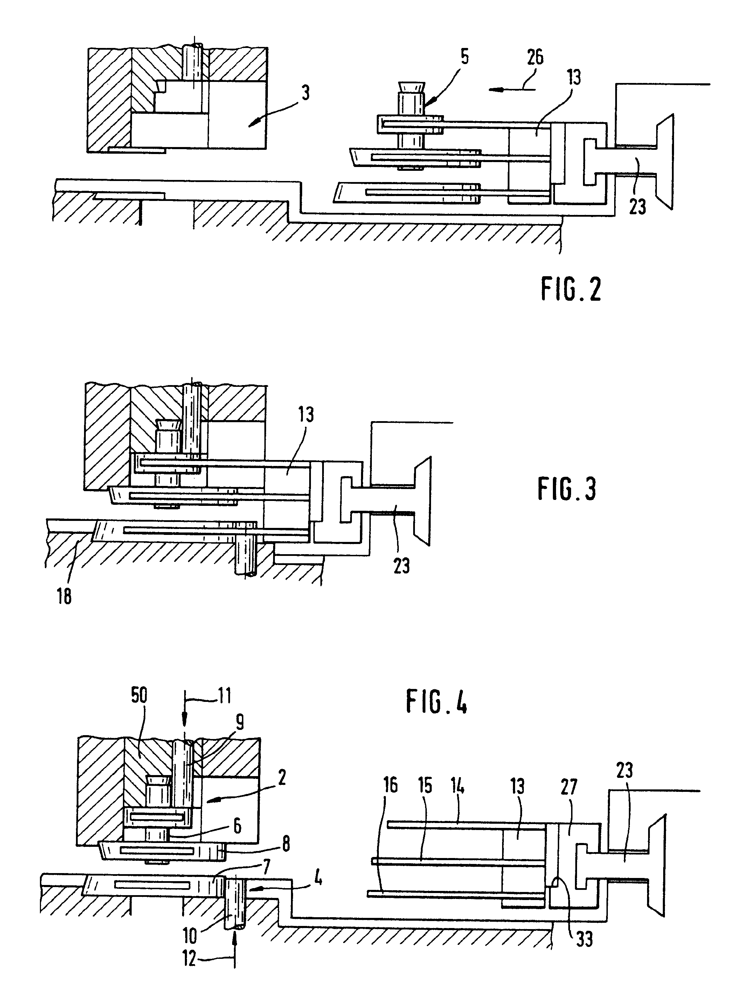

Da in der modernen Blechbearbeitung das Werkstück 17 nicht nur mit einem einzigen Stanzwerkzeug, sondern in der Regel mit mehreren unterschiedlich ausgebildeten Stanzwerkzeugen bearbeitet wird, muß nach Beendigung des Arbeitens mit dem momentan in der Maschine befindlichen Stanzwerkzeug 5 letzteres aus der Werkzeugaufnahme 3 herausgenommen und durch ein anderes ersetzt werden. Das Einwechseln erfolgt, wie erläutert, recht vorteilhaft jeweils mit Hilfe eines Halters 13, auf welchem die Werkzeugteile auch bei Nichtgebrauch verbleiben können. Aus Fig. 2 ersieht man, daß der Halter 13 mit dem einzusetzenden Stanzwerkzeug 5 im Sinne des Pfeils 26 in die Werkzeugaufnahme 3 verlagert wird.

Fig. 3 zeigt die erreichte Einwechsel-Endstellung. Nach dem Übergeben des Werkzeugs an die Werkzeugaufnahme und die entsprechende Einriegelung mit der Verriegelungsvorrichtung 9 und 10 wird der leere Halter 13 gemäß Fig. 4 wieder in die Ausgangslage zurückgebracht. Zum Auswechseln des Werkzeugs muß der leere Halter im Sinne des Pfeils 26 nochmals gegen die Werkzeugaufnahme verschoben werden und der übernimmt nach dem Ausriegeln des Stanzwerkzeugs 5 sowie der sicheren Arretierung am Halter 13 das ausgebrauchte Werkzeug, um mit ihm in die aus Fig. 2 ersichtliche Ausgangsstellung zurückzukehren. Nunmehr kann ein anderes Stanzwerkzeug eingewechselt werden.

Erfindungsgemäß befindet sich der Halter 13 bzw. wenigstens ein Halter 13 an der Tragschiene 23 der Stanzmaschine, so daß man die Relativbewegung im Sinne des Pfeils 26 entweder durch eine Verlagerung der Tragschiene 23 quer zu ihrer Längsachse gegen die Werkzeugaufnahme 3 hin oder aber durch eine gegenläufige Bewegung der Werkzeugaufnahme gegen die Tragschiene 23 bewirken kann. In beiden Fällen kann ein für diese Bewegung der Tragschiene 23 oder der Werkzeugaufnahme 3 vorhandener Antrieb der Stanzmaschine für die Auswechselbewegung im Sinne des Doppelpfeils 26 bzw. 24 ausgenutzt werden. Aus dem Vorstehenden wird klar, daß dieses Auswechseln ein Ausrichten des Halters 13 im Sinne des Doppelpfeils 22 gegenüber der Werkzeugaufnahme 3 voraussetzt. Man erreicht dies auf einfache Weise durch eine entsprechende Verschiebebewegung der Tragschiene 23. Auch hierzu kann man den vorhandenen Werkstückvorschub einschl. seiner numerischen Steuerung vorteilhafterweise ausnutzen.

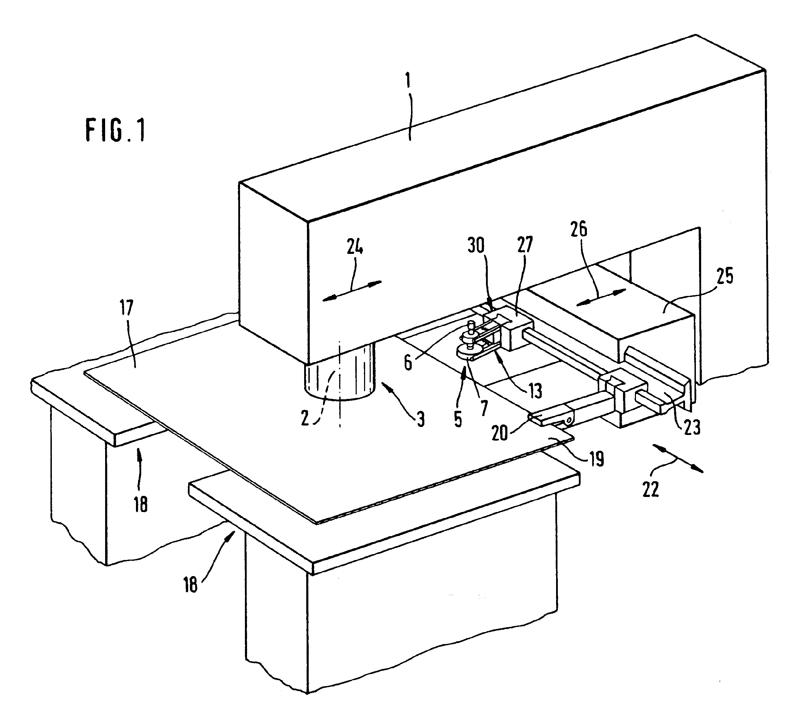

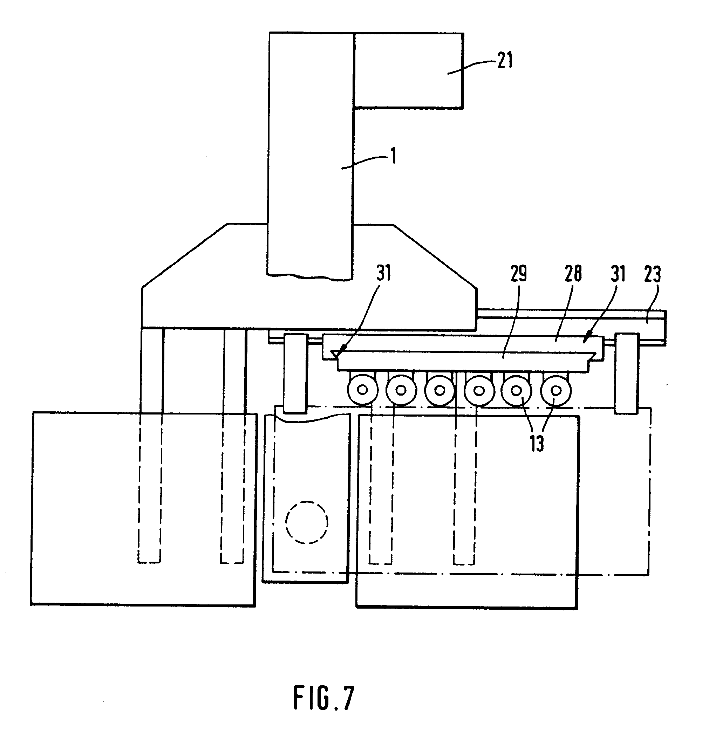

Zweckmäßigerweise ist der bzw. jeder Halter 13 lösbar an einem Zwischenstück 27 der Tragschiene 23 befestigt. Dieses ist in Längsrichtung der Tragschiene 23 verschieb- und feststellbar an letzterer gehalten. Gemäß Fig. 1 ist diese Verschiebebewegung durch die Pratzen 20 begrenzt, wenn beide am selben Teil des Profils verschiebbar gelagert sind, so wie es das Ausführungsbeispiel nach Fig. 1 vorsieht. Das Festsetzen des bzw. jedes Zwischenstücks 27 kann in gleicher und bekannter Weise erfolgen, wie das Festsetzen der verschieb- und feststellbaren Pratzen, also beispielsweise durch hydraulisches oder pneumatisches Anklemmen. Im Falle von mehreren Haltern kann man diese gemäß Fig. 6 einzeln verschieb- und festsetzbar an der Tragschiene 23 montieren oder aber gemäß Fig. 7 das Zwischenstück als mit der Tragschiene verbindbare, zu ihr parallele, schienenförmige Haltevorrichtung 28 für mehrere Halter ausbilden.

Beim Ausführungsbeispiel nach Fig. 7 sind alle Halter an einem gemeinsamen, senkrecht zur Bildebene aus der Haltevorrichtung 28 herausziehbaren Tragbalken 29 angebracht. Statt dessen könnte man die Haltevorrichtung 28 aber auch so ausbilden, daß jeder Halter 13 einzeln aushebbar ist. Auf jeden Fall besteht hierdurch die Möglichkeit, eine Gruppe von Haltern und damit auch eine Gruppe von Stanzwerkzeugen in einem einzigen Arbeitsgang durch eine andere Werkzeuggruppe auszutauschen. Der Austausch erfolgt bei Fig. 7 durch Abnehmen des Tragbalkens 29 von der Haltevorrichtung 28, wobei beide über eine Schiebeverbindung 31 miteinander verbunden sind. Sie verläuft in vertikaler Richtung, so daß man das Eigengewicht des Tragbalkens 29 und der Halter 13 zur Montage ausnutzen kann.

Bei der Einzelanbringung der Halter 13 ist zwischen diesem und jedem Zwischenstück 27 gleichfalls eine Schiebeverbindung 30 vorgesehen, wobei es sich wiederum um eine vertikale Schwalbenschwanzverbindung handeln kann. Letztere hat den Vorzug, daß man die Einschiebebewegung mit Hilfe eines unteren Längsanschlags 33 begrenzen kann (Fig. 4).

Bei der Ausführungsform nach Fig. 1 kann man die Halter 13 in Längsrichtung der Tragschiene 23 von dieser abnehmen, jedoch muß bei diesem Ausführungsbeispiel zuvor auch die Pratze 20 entfernt werden. Diese Art des Austausches ist aber nur dann zweckmäßig, wenn verhältnismäßig viele Halter 13 verwendet werden, wie dies die Fig. 6 zeigt. Dabei kann es vorkommen, daß mehr als eine Pratze entfernt werden muß, damit alle Halter seitlich herausgeschoben werden können. Dazuhin sollte der Wechsel verhältnismäßig selten stattfinden, d.h. es sollte eine möglichst große Serie aufgelegt werden, die mit den aus der Tragschiene 23 montierten bzw. gehaltenen Stanzwerkzeugen fertig bearbeitet werden kann.

Das Ausführungsbeispiel nach Fig. 7 macht den Austausch einer Werkzeuggruppe wesentlich einfacher. Andererseits kann man aber sowohl bei dieser Figur als auch bei der Ausbildung nach den Fign. 1 und 6 das Abnehmen der Pratzen 20 dadurch vermeiden, wenn man Zwischenstücke 27 verwendet und diese an der Tragschiene 23 beläßt, so daß nach vorherigem Lösen einer entsprechenden Sicherungseinrichtung lediglich

7

die Halter 13 nach oben abgenommen zu werden brauchen. Für eine Vielzahl von Haltern 13 benötigt man nur verhältnismäßig wenige Zwischenstücke 27.

Welcher der verschiedenen Ausführungsformen man den Vorzug gibt, hängt von der jeweiligen Verwendungsart der Stanzmaschine ab. Besonders universell ist die Ausbildung nach den Fign. 1 und 6. Insbesondere ermöglicht sie auch das Verwenden einer ausreichenden Zahl von Pratzen 20 und ihre Anordnung an der jeweils günstigsten Stelle.

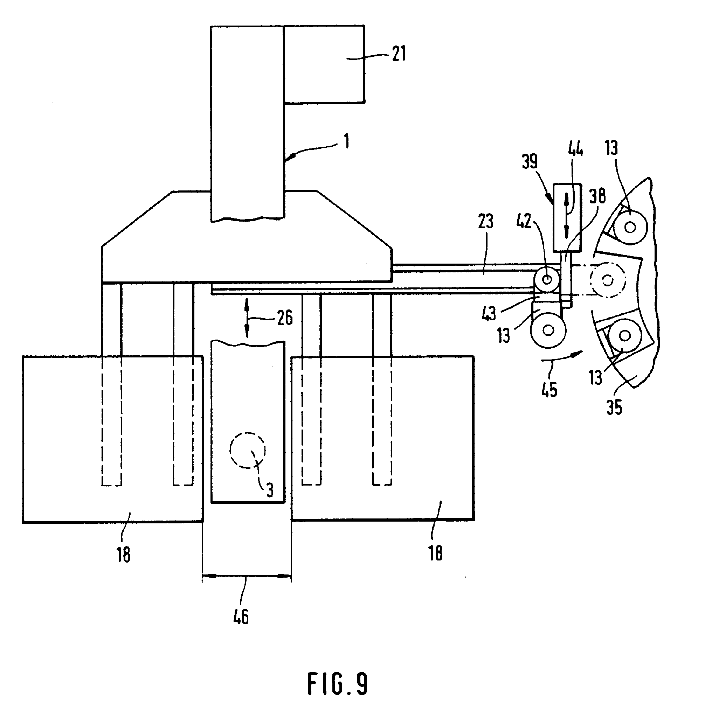

Die Matrize 7 des Stanzwerks 5 befindet sich unterhalb der Werkstückebene, während der Stempel und gegebenenfalls der Abstreifer oberhalb der Werkstückebene bzw. des Werkstücks gelegen sind. Weil jedoch des gesamte Werkzeug mit Hilfe eines einzigen Halters 13 ein- und ausgewechselt wird, muß er Tisch so gestaltet sein, daß er diese Ein- und Auswechselbewegung des Halters 13 nicht behindert. Vorteilhafterweise verwendet man zwei Werkstücksauflagetische 18, die gemäß beispielsweise Fig. 9 einen Seitenabstand 46 haben. In Längsrichtung der Tragschiene 23 gesehen, haben sie von der Werkzeugaufnahme 3 vorzugsweise einen gleichen Abstand. Zweckmäßigerweise sind sie auch in etwa gleich groß. Statt dessen kann man auch einen durchgehenden großen Werkstückauflagetisch vorsehen, der dann aber an seiner der Tragschiene 23 zugekehrten Längsseite einen Schlitz aufweisen muß, dessen Breite etwa dem Seitenabstand 46 entspricht und der bis zur Werkzeugaufnahme 3 reicht. Anders ausgedrückt, kann man sich die beiden Werkstückauflagetische 18 an ihrem von der Tragschiene 23 abgewandten Ende miteinander verbunden vorstellen.

Ein weiteres Erfordernis für den automatischen Werkzeugwechel ist die Verschiebbarkeit der Tische 18 quer zur Längsrichtung der Tragschiene 23, also in Übergaberichtung 26, zusammen mit der der Tragschiene 23.

Es bleibt noch nachzutragen, daß die Seitenabstände der Halter 13 an der Tragschiene 23 (Fig. 6) in die numerische Steuerung 21 eingebbar sind. Außerdem ersieht man aus Fig. 5, daß die beiden Arme jedes Haltearmpaars 14, 15, 16 mittels einer Feder 47 gegeneinander gezogen werden und jeder Arm drehbar am Grundkörper des Halters 13 gelagert ist. Der Übersichtlichkeit wegen wurde diese Ausbildung nur für das Haltearmpaar 14 eingezeichnet. Die freien Enden der Haltearme greifen in parallele, gegenüberliegende Nuten am Außenumfang des betreffenden Stanzwerkzeugteils ein, und die Fixierung erfolgt dort in bekannter Weise mittels Zentrierstiften 48. Ein Schnepper 49 oder eine vergleichbare Verrasteinrichtung sichert die korrekte Lage des Halters 13 gegenüber dem Zwischenstück 27.

In Fig. 4 ist der Stößel der Stanzmaschine mit 50 bezeichnet.

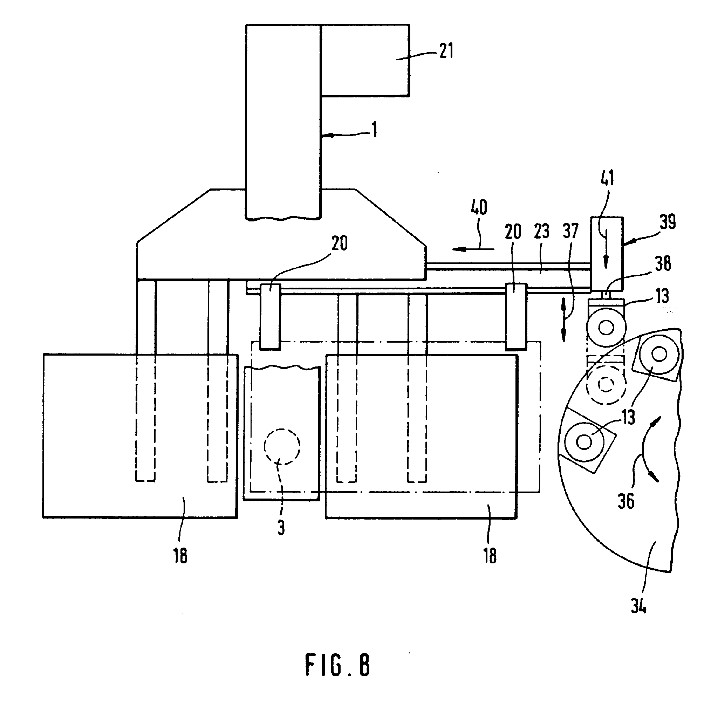

Bei den Ausführungsbeispielen nach den Fign. 8 und 9 ist der bzw. ein Halter 13 dem in der Zeichnung rechten Ende der Tragschiene 23 zugeordnet. Hier reicht ein einziger Halter an der Tragschiene 23 an sich aus, weil er in Verbindung mit einem Magazin 34 bzw. 35 verwendet wird, auf welchem sich noch eine ganze Anzahl weiterer Halter 13 befinden. Vorzugsweise sind die Magazine um ihre zentrische Achse im Sinne des Doppelpfeils 36 drehbar, so daß jeweils ein Halter bzw. ein freier Halterplatz auf dem Magazin gegenüber derin einer vorbestimmten Stellung, insbesondere ihrer rechten Verschiebeendstellung, stehenden Tragschiene 23 ausgerichtet werden kann. Wenn sich links und rechts der Maschine je ein Magazin befindet, so kann man auch am linken Ende der Tragschiene 23 eine Einrichtung für Halter 13 vorsehen, die derjenigen am rechten Tragschienenende entspricht.

Der Halter 13 ist abweichend von beispielsweise Fig. 1 und 6 nicht an einem starr mit der Tragschiene verbundenen Zwischenstück gehalten, sondern an einen diesem entsprechenden, im Sinne des Doppelpfeils 37 verfahrbaren Zwischenstück. Es handelt sich dabei um einen Kolben 38 eines hydraulischen oder pneumatischen Arbeitszylinders 39. Infolgedessen kann der Halter 13 ausgehend von der, beispielsweise mit festen Linien gezeichneten Stellung (Fig. 8) in die mit gestrichelten Linien gezeichnete Übergabestellung verschoben werden. Wenn der Halter auf dem Magazin 34 abgesetzt ist, so kann man es um einen vorbestimmten Winkel weiterdrehen, wodurch der Halter mit als nächstes benötigten Stanzwerkzeug in den Bewegungsbereich der aus Kolben 38 und Arbeitszylinder 39 bestehenden Übernahme- und Übergabevorrichtung gelangt. Anschließend verschiebt man die Tragschiene 23 mit Hilfe des Werkstückvorschubs der Stanzmaschine und insbesondere unter Ausnutzung ihrer numerischen Steuerung im Sinne des Pfeils 40 bis das an dem als Tragarm dienenden Kolben 38 befindliche Stanzwerkzeug 5 mit Halter 13 in die Werkzeugaufnahme 3 übergeben werden kann. Auch hierbei kann man sich die Verschiebebewegung des Kolben 38 in Pfeilrichtung 41 zunutzen machen, wenn die Werkzeugaufnahme 3 maschinenfest ist.

Während Fig. 8 eine geradlinige Übergabebewegung 41 für den Halter 13 vorsieht, ist der Halter 13 in Fig. 9 mittels eines drehbar an einer Achse 42 der Tragschiene 23 gelagerten Arms 42 verschwenkbar. Mit festen Linien ist die für die Übergabe in die Werkzeugaufnahme 3 geeignete Stellung des Halters bzw. Stanzwerkzeugs gezeichnet, während strichpunktierte Linien die Übergabeposition für den Halter 13 in das Magazin 35 bzw. aus letzterem versinnbildlicht. Als Antrieb ist wiederum ein hydraulischer oder pneumatischer Arbeitszylinder 39 vorgesehen, dessen Kolben 38 seitlich der Drehachse 42 gelenkig mit dem drehbaren Arm 43 gekuppelt ist. Wenn der Kolben ausgehend von der mit festen Linien gezeichneten Übergabestellung im Sinne des Pfeils 44 eingezogen wird, so führt dies zu einer Schwenkbewegung in Pfeilrichtung 45, wobei die beiden Endstellung vorzugsweise 90° auseinanderliegen. Das Absetzen, Entriegeln sowie Verriegeln und Aufnehmen der Halter 13 in bzw. vom Magazin 34, 35 kann in vergleichbarer Weise stattfinden wie das Ein- und Ausriegeln des Werkzeugs 5 in die Werkzeugaufnahme 3. Für die notwendigen Bewegungen beim Übergeben, Einriegeln und Ausriegeln kann man wiederum die numerische Steuerung der Stanzmaschine 1 heranziehen. Anstelle eines Arbeitszylinders kann auch ein bekannter Drehantrieb verwendet werden.

Wie bereits erläutert, entspricht der drehbare Arm 43 der Fig. 9 dem Zwischenstück 27 der Fign. 1 und 6. Der Halter 13 wird aber damit nicht über eine Schwalbenschwanzverbindung gekuppelt, sondern vorzugsweise über ein Klemm- Rast- oder Schnappverbindung, so daß die Kupplung über die geradlinige Bewegung 44 (Fig. 8) bzw. Schwenkbewegung 45 (Fig. 9) hergestellt und gelöst werden kann.

Den drehbaren Arm 43 der Fig. 9 kann man auch doppelarmig ausbilden und an jedem seiner Enden je eine Klemmvorrichtung od. dgl. Kuppelvorrichtung für je einen Halter 13 vorsehen. Jeweils eine dieser Klemmvorrichtungen ist frei. Mit dieser kann man beim Werkzeugwechsel den als nächsten benötigten Halter 13 aus dem Magazin 35 entnehmen und nachfolgend das zuvor benutzte Werkzeug an die hierfür vorgesehene Stelle des Magazins 35 übergeben oder umgekehrt. Daraufhin wird dann das zweite Werkzeug in die Werkzeugaufnahme 3 eingewechselt. Möglicherweise muß der Antrieb für die Drehbewegung entsprechend angepaßt oder geändert werden.

Bei den Magazinen 34 und 35 handelt es sich, wie gesagt, um Rundmagazine, auf denen die Halter kreis- oder kreisbogenförmig untergebracht sind. Im Gegensatz zur Darstellung nach Fig. 9 kann man die Schwenkbewegung des drehbaren Arms 43 auch dazu ausnutzen, den Halter 13 einen vorbestimmten Platz in einem hohlgewölbten konzentrisch zur Drehachse 42 angeordneten Magazin zuzuordnen. Dieses Magazin braucht dann nicht gedreht zu werden und kann infolgedessen von einfacher Bauart sein.

Wenn man ein Magazin verwendet, welches mehrere übereinander angeordnete Reihen von Haltern bzw. Plätzen für Halter 13 aufweist, wobei die Reihen höhenverstellbar sind, so läßt sich die Kapazität des Magazins vervielfachen.

## Patentansprüche

1. Stanzmaschine mit einem mittels eines Halters (13) in ihre Werkzeugaufnahme (3) ein- und auswechselbaren, mindestens aus Stempel (6) und Matrize (7) bestehenden Stanzwerkzeug (5) sowie einer Werkstückvorschubvorrichtung mit einer mindestens in Richtung (22) ihrer Längachse verschiebbaren Werkstück-Tragschiene (23), dadurch gekennzeichnet, daß an der Tragschiene (23) wenigstens ein Halter (13) mit einem quer zur Tragschienenlängsachse ein- und auswechselbaren Stanzwerkzeug (5) angebracht ist, wobei der Halter (13) mit dem zu wechselnden Stanzwerkzeug (5) gegen die Werkzeugaufnahme (3) und/oder letztere gegen den Halter (13) hin verstellbar ist.

2. Maschine nach Anspruch 1, dadurch gekennzeichnet, daß der bzw. jeder Halter (13) lösbar an einem Zwischenstück (27) der Tragschiene (23) befestigt ist.

3. Maschine nach Anspruch 2, dadurch gekennzeichnet, daß das Zwischenstück als mit der Tragschiene (13) verbundene, zu ihr parallele schienenförmige Haltevorrichtung (28) für mehrere Halter (13) ausgebildet ist.

4. Maschine nach Anspruch 3, dadurch gekennzeichnet, daß jedes Zwischenstück (27, 28) in Längsrichtung der Tragschiene (23) verschieb- und feststellbar ist.

5. Maschine nach Anspruch 3 oder 4, dadurch gekennzeichnet, daß jeder Halter (13) bzw. der Tragbalken (29) über eine vertikale Schiebeverbindung (30, 31), insbesondere Schwalbenschwanzverbindung, mit seinem Zwischenstück (27) bzw. der Haltevorrichtung (28) verbindbar ist.

6. Maschine nach Anspruch 5, gekennzeichnet durch einen unteren Längsanschlag (33) des Zwischenstücks (27) bzw. der Haltevorrichtung (28) für seinen Halter (13) bzw. den Tragbalken (29).

7. Maschine nach wenigstens einem der Ansprüche 1 bis 3, dadurch gekennzeichnet, daß der Halter (13) einem der Tragschienenendbereiche zugeordnet ist.

8. Maschine nach Anspruch 7, dadurch gekennzeichnet, daß der Halter (13) mittels eines drehbar oder verschiebbar an der Tragschiene (23) gelagerten Arms (43, 38) gehalten und der Arm mit einem Dreh- oder Verschiebeantrieb (39) verbunden ist.

9. Maschine nach Anspruch 8, dadurch gekennzeichnet, daß der Dreh- oder Verschiebeantrieb ein hydraulischer oder pneumatischer Arbeitszylinder (39) ist, wobei der Drehantrieb im seitlichen Abstand von der Armdrehachse (42) am Arm (43) angelenkt ist.

10. Maschine nach wenigstens einem der Ansprüche 7 bis 9, dadurch gekennzeichnet, daß die Stanzmaschine mit einem Magazin (34, 35) od. dgl. Lagervorrichtung für mehrere Werkzeughalter (13) ausgestattet ist, und daß das als bewegbarer Arm (38, 43) ausgebildete Zwischenstück klemmbar, verrastbar oder in ähnlicher Weise lösbar mit jeweils einem Halter kuppelbar ist, wobei jeder Halter in eine Übergabe- bzw. Übernahmeposition bringbar ist.

11. Maschine nach wenigstens einem der Ansprüche 8 bis 10, dadurch gekennzeichnet, daß der Arm (43) als doppelarmiger Hebel ausgebildet ist und er an seinen beiden Enden je eine Klemmvorrichtung od. dgl. für je einen Halter (13) trägt.

12. Maschine nach Anspruch 10 oder 11, dadurch gekennzeichnet, daß die Halter (13) im Magazin (34, 35) kreisbogenförmig angeordnet und bewegbar sind.

13. Maschine nach wenigstens einem der Ansprüche 10 bis 12, gekennzeichnet durch mehrere, übereinander angeordnete Reihen von Haltern (13) im Magazin (34, 35).


## Revendications

1. Presse à découper possédant un outillage (5) de découpage avec ou sans façonnage, outillage qui est composé d'au moins un poinçon (6) et d'une matrice (7) et peut être mis en place dans un raccordement ou réception d'outillage (3) et retiré de celle-ci, ainsi qu'un dispositif d'avancement de la pièce à travailler, possédant un rail porteur (23) destiné à supporter la pièce à travailler et. qui est au moins déplaçable en translation dans la direction (22) de son axe longitudinal, caractérisée en ce qu'au moins un support (13), pourvu d'un outillage de découpage (5) pouvant être mis en place et enlevé par des mouvements transversalement à l'axe longitudinal du rail porteur lors d'un changement d'outillage, est disposé sur le rail porteur (23) dans un agencement permettant de déplacer le support (13) avec l'outillage de découpage (5) à mettre en place vers la réception d'outillage (3) et/ou de déplacer cette réception (3) vers le support (13).

2. Presse selon la revendication 1, caractérisée en ce que le support ou chaque support (13) est fixé amovible à une pièce intermédiaire (27) du rail porteur (23).

3. Presse selon la revendication 2, caractérisée en ce que la pièce intermédiaire est réalisée comme un dispositif de maintien (28) avant la forme d'un rail et conçu pour plusieurs supports (13), qui est relié au rail porteur (13) et est parallèle à lui.

4. Presse selon la revendication 3, caractérisée en ce que chaque pièce intermédiaire (27, 28) est déplaçable en translation et blocable dans la direction longitudinale du rail porteur (23).

5. Presse selon la revendication 3 ou 4, caractérisée en ce que chaque support (13), ou la poutre porteuse (29), peut être relié par une liaison à coulissement vertical (30, 31), en particulier une liaison à queue d'aronde, à sa pièce intermédiaire (27) ou au dispositif de maintien (28).

6. Presse selon la revendication 5, caractérisée en ce que la pièce intermédiaire (27) ou le dispositif de maintien (28) présente, en bas, une butée longitudinale (33) pour son support (13) ou pour la poutre porteuse (29).

7. Presse selon au moins une des revendications 1 à 3, caractérisée en ce que le support (13) est coordonné à l'une des portions extrêmes du rail porteur.

8. Presse selon la revendication 7, caractérisée en ce que le support (13) est tenu par un bras (43, 38) monté rotatif ou mobile en translation sur le rail porteur (23) et relié à une commande de rotation ou de translation (39).

9. Presse selon la revendication 8, caractérisée en ce que la commande de rotation ou de translation est un vérin hydraulique ou pneumatique (39), la commande de rotation étant articulée au bras (43) à distance latérale de l'axe de rotation ou de pivotement (42) du bras.

10. Presse selon au moins une des revendications 7 à 9, caractérisée en ce qu'elle est équipée d'un magasin (34, 35) ou d'un dispositif d'entreposage analogue pour plusieurs supports d'outillages (13) et que la pièce intermédiaire, réalisée sous la forme d'un bras mobile (38, 43), peut être accouplée à un support par serrage, à cran ou d'une manière semblable permettant le désaccouplement, chaque support pouvant être amené à une position de transfert ou de réception.

11. Presse selon au moins une des revendications 8 à 10, caractérisée en ce que le bras (43) est réalisé comme un levier à deux bras et porte un dispositif de serrage ou analogue pour un support (13) à chacune de ses deux extrémités.

12. Presse selon la revendication 10 ou 11, caractérisée en ce que les supports (13) sont disposés et déplaçables en arc de cercle dans le magasin (34, 35).

13. Presse selon au moins une des revendications 10 à 12, caractérisée par plusieurs rangées superposées de supports (13) dans le magasin (34, 35).

## Claims

1. A stamping machine with a stamping tool (5) consisting of at least a die (6) and die-plate (7) and adapted to be inserted into its tool-holder (3) and exchanged by means of a holder (13), and with a workpiece feed device with a workpiece carrier rail (22) displaceable at least in the direction (22) of its longitudinal axis, characterised in that on the carrier rail (23) there is mounted at least one holder (13) with a stamping tool (5) adapted to be fitted and exchanged transversely to the longitudinal axis of the carrier rail, the holder (13) with the stamping tool (5) which is to be changed being adjustable in respect of the tool holder (3) and/or the latter being adjustable in respect of the holder (13).

2. A machine according to claim 1, characterised in that the or each holder (13) is separably attached to an intermediate member (27) on the carrier rail (23).

3. A machine according to claim 2, characterised in that the intermediate member is constructed as a rail-shaped device (28) for holding a plurality of holders (13) and connected to and parallel with the carrier rail (13) (sic!).

4. A machine according to claim 3, characterised in that each intermediate member (27, 28) is adapted for displacement in the longitudinal direction of the carrier rail (23) and is lockable.

5. A machine according to claim 3 or 4, characterised in that each holder (13) or the carrier bar (29) can via a vertical sliding connection (30, 31), particularly a dovetail connection, be connected to its intermediate member (27) or holding device (28).

6. A machine according to claim 5, characterised by a bottom longitudinal abutment (33) of the intermediate member (27) or of the holding device (28) for its holder (13) or for the carrier bar (29).

7. A machine according to at least one of claims 1 to 3, characterised in that the holder (13) is associated with one of the end zones of the carrier rail.

8. A machine according to claim 7, characterised in that the holder (13) is supported by an arm (43, 38) rotatably or displaceably mounted on the carrier rail (23) and in that the arm is connected to a drive (39) for rotation or displacement.

9. A machine according to claim 8, characterised in that the rotation or displacement drive is a hydraulic or pneumatic working cylinder (39), the rotation drive being articulated on the arm (43) at a lateral distance from the axis of rotation (42) of the arm).

10. A machine according to at least one of claims 7 to 9, characterised in that the stamping machine is equipped with a magazine (34, 35) or like storage device for a plurality of tool holders (13) and in that the intermediate member which is constructed as a movable arm (38, 43) can be clamped, engaged by snap fitment or in a similar manner detachably coupled to a respective holder, each holder being capable of being moved into a transfer or take-over position.

11. A machine according to at least one of claims 8 to 10, characterised in that the arm (43) is constructed as a double-armed lever and carries at its two ends respective clamping devices or the like for in each case one holder (13).

12. A machine according to claim 10 or 11, characterised in that the holders (13) are disposed in and are arcuately movable in the magazine (34, 35).

13. A machine according to at least one of claims 10 to 12, characterised by a plurality of superposed rows of holders (13) in the magazine (34, 35).

FIG.1

EP 0 343 552 B1

FIG.2

FIG.3

FIG.4

FIG.5

FIG.6

FIG.7

FIG.8

FIG.9